(19) Europäisches Patentamt / European Patent Office / Office européen des brevets

(11) **EP 2 872 386 B1**

(12) **EUROPEAN PATENT SPECIFICATION**

(45) Date of publication and mention
of the grant of the patent:
**14.09.2016 Bulletin 2016/37**

(21) Application number: **13747984.6**

(22) Date of filing: **11.07.2013**

(51) Int Cl.:
**B62M 3/08** (2006.01)

(86) International application number:
**PCT/EP2013/064744**

(87) International publication number:
**WO 2014/009503 (16.01.2014 Gazette 2014/03)**

(54) **DEVICE AND METHOD FOR MEASURING FORCES APPLIED TO A CYCLING SHOE**

VORRICHTUNG UND VERFAHREN ZUR MESSUNG DER AUF EINEN FAHRRADSCHUH
AUSGEÜBTEN KRÄFTE

DISPOSITIF ET PROCÉDÉ DE MESURE DE FORCES APPLIQUÉES À UNE CHAUSSURE DE
CYCLISME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.07.2012 GB 201212299**

(43) Date of publication of application:
**20.05.2015 Bulletin 2015/21**

(73) Proprietor: **Brim Brothers Limited
6W Dublin (IE)**

(72) Inventor: **REDMOND, Barry
6W Dublin (IE)**

(74) Representative: **Lucey, Michael
PurdyLucey
Intellectual Property
6-7 Harcourt Terrace
D2 Dublin (IE)**

(56) References cited:
WO-A1-2010/000369          US-A- 5 323 650
US-A1- 2006 248 965       US-A1- 2007 006 489
US-A1- 2007 245 835       US-A1- 2007 261 271
US-A1- 2011 087 446

**Description**

**Field of the Invention**

The invention relates to a device for measuring forces applied by a cycling shoe and method for same.
WO-A-2010/000369 discloses a device having the features of the preamble of claim 1.

**Background**

Measurement of the forces applied by a cyclist to a bicycle pedal can be used for a number of purposes. These include calculation of the applied torque and power, detecting whether the cyclist is seated or standing, monitoring the efficiency of the cycling action, and detecting and measuring biomechanical characteristics of the cyclist. Typically, systems that are intended for any of these applications consist of some combination of the following four parts:

1. A set of sensors that detect forces.

2. A set of sensors that detect motion.

3. An electronic processing module that receives and processes the outputs of the force and motion sensors.

4. A display and/or recording module that receives the output from the processing module.

The force sensors, motion sensors and processing module are typically located very close to each other, or are integrated with each other, and are connected by short wired links. Typically, the display module is located elsewhere on the bicycle or cyclist and is connected to the processing module via a wired or a wireless link. The processing module takes the values from the force and motion sensors, processes them to produce useful information, and sends the results to the display or recording module.
Pedals used by competitive cyclists are characterised by a locking mechanism whereby a cleat fixed to the underside of the cyclist's shoe engages with the pedal, and maintains the shoe in connection with the pedal under all forces applied by a cyclist during normal operation. The forces of interest while cycling are the forces applied by the cyclist's foot through the sole of the shoe and the cleat into the pedal. During a revolution of the crank, the direction and magnitude of the force exerted by the cyclist on the pedal will vary. The force is most usefully considered as consisting of a pair of orthogonal force vectors. One vector is normal to the plane of the interface between the cleat (which is attached to the sole of the shoe) and the pedal, and one vector is parallel to the plane in the forwards/backwards direction. At any instant, if the magnitudes of the normal and parallel vectors are known then the magnitude and direction of the total force is known.
The normal force vector represents pure compression (push down) or tension (pull up) force on the cleat/pedal interface. The parallel vector represents pure shear (slide forwards or backwards) force on the cleat/pedal interface. Compression force is usually the principal component used by a cyclist to exert force on a pedal, but tension and/or shear force components can form a significant part of the total force exerted by the cyclist at certain points during the revolution of the crank. An accurate force measurement system must include a means to measure compression, tension and shear components of the forces applied by the cyclist to the pedal.
Existing systems for measuring forces applied to a pedal can be divided into two categories. The first category is systems that use force sensors in or on the pedal. These suffer from the limitation that they are not easily moved between bicycles. The measurement sensors are integrated into the pedal, and therefore moving the system to another bicycle requires removal and refitting of the pedals. Examples include US Patent 8,011,242 (O'Neill et al.), PCT Publication No. WO 2012/038677 (Gros et al.), US Patent Publication No. 2011/0067503 (Roudergues et al.), and PCT Publication No. WO 2010/088888 (Biermann et al.).
The second category is systems that use force sensors in or attached to the cyclist's shoe. However, all of the prior art systems of this category are either mounted outside the shoe exposed to the environment, or are limited in their measurement of the total force exerted on the pedal by the cyclist. Systems of this category include:

- US Patent 7,599,806 (Hauschildt): This system claims a matrix of compression sensors inside the sole of the cycling shoe. It cannot measure pull-up (tension) or shear forces applied by the cyclist because there is no means for these forces to be intercepted by the sensing system, and therefore the system cannot measure total applied force accurately.

- US Patent 8,122,773 (Wyatt et al): This patent describes a force sensor. layer that is mounted outside the cycling shoe, as an extra layer between the sole and the cleat. It does not measure shear force, and it increases the height of the shoe above the pedal.

- US Patent Publication No. 2011/0087446, EU Patent Publication No. 2 300 796 (Redmond et al): The described system uses sensors embedded in the cleat, and therefore outside the shoe.

There are also a number of prior art systems that describe sensors in running or walking shoes. These are generally concerned with measurement of movement, and distribution of pressure on the sole. Systems of this type include:

- US Patent 7,607,243 (Berner et al) claims a system for inserting an electronics module in an athletic running shoe to measure location, speed and distance. It does not include cycling shoes, and it does not claim measurement of force.

- US Patent 7,627,451 (Vock et al) includes a description of a system for measuring a runner's weight, for detecting movement of a runner's shoe, and for detecting impact of a shoe with the ground. It does not include cycling shoes and it does not include measurement of tension or shear forces.

- PCT Patent Publication No. WO 2009/136128 (Cattin et al) describes a system that uses a flexible membrane of sensors in the flexible sole of a walking shoe to measure characteristics of walking. It cannot be used for measuring forces in a cycling shoe because the sole of a cycling shoe is required to be extremely rigid, and because the system cannot measure tension or shear forces.

- PCT Patent Publication No. WO 00/33031 (Shacar et al) claims a system that includes the use of motion sensors and pressure sensors in the sole of a running shoe, to measure the activity of a runner. It does not include cycling shoes. Pressure measurement is only of compressive (downward) pressure, so it does not measure tension or shear forces.

- US Patent 6,807,869 (Farringdon et al) describes a system for detecting the pattern of compressive force on the sole of a shoe. The system does not measure force; it only detects the presence or absence of force.

- Japanese patent application JP2005-214850A (Nojiri et al) describes a system of force sensors embedded in a rubber layer in the sole of a running or walking shoe. It is not usable in a cycling shoe because the sensors do not measure tension forces, and the sensor structure requires a layer that is too thick to fit in the sole of a cycling shoe.

None of these systems support measurement of tension or shear forces, and therefore they are not usable for accurate measurement of forces in cycling shoes.

It is an object of the present invention to overcome at least one of the above-mentioned problems.

## Summary of the Invention

According to the present invention there is provided, as set out in the appended claims, a device for determining power output comprising at least two sensors and a shoe comprising the device.

The present invention overcomes the limitations of the prior art shoe sensors by providing a force measurement device inside the cycling shoe that can measure or calculate compression (push down), tension (pull up) and shear forces that act at the plane of the interface between the cleat and the pedal.

The present invention consists of two parts: a measurement device and a processing method. The first part is a force measurement device inside a cycling shoe, located between the sole of the shoe and the cyclist's foot. The device is a sensor platform that measures compression and tension forces applied by the cyclist through the sole of the shoe to the cleat that is attached to the shoe, and thereby to the pedal of the bicycle. The second part of the invention is a method or algorithm for processing the force sensor outputs to calculate the shear force applied by the cyclist. This allows shear force to be discovered without the need for extra sensors to directly measure it.

In one embodiment the sensor platform is connected to an electronic processing module that is in or attached to the shoe and that executes the algorithm. At regular short intervals (typically many times per second) the processing module takes the outputs from the sensor platform, and applies the algorithm to calculate shear force. There is one sensor platform and one processing module for each shoe. The processing modules on the left and right shoes may communicate with each other by wired or wireless links to exchange values. The processing modules may include measurements from other sensors, and may use all the measurements and calculated values available to them to calculate other quantities such as velocities, angular positions, cadence, pressure, force distribution, torque, and power. The values measured and calculated by the processing modules may be electronically recorded by them for later analysis. The values may also be sent by a wired or a wireless connection to one or more other devices for display or recording or onward transmission to another system.

In one embodiment the sensor platform is located inside the shoe, in a space provided in the sole, so that the sensor platform is directly underneath the area of the cyclist's foot that is used to exert force on the cleat and the pedal. A cleat is typically attached to a cycling shoe using bolts that are screwed into holes in the sole of the shoe. The sensor platform is positioned and/or dimensioned so that it covers the area of the sole that is used to support the cleat, and includes the holes that are used to attach the cleat. The bolts used to fix the cleat pass through the sole of the shoe and are screwed directly into threaded holes in the sensor platform.

In one embodiment the sensor platform includes at least two types of force sensors. The first type is a set of sensors designed to detect compression between the top plate and the bottom plate, and the second type is a set of sensors designed to detect tension from the cleat attachment bolts.

In one embodiment a number of compression sensors are fitted to the sensor platform such that all compressive forces must pass through at least one of the sensors in order to act on the cleat and pedal. A higher number of sensors allow more detailed measurement of the distribution of force applied by the cyclist, and a lower number reduces the cost of manufacture of the sensor platform. The compression sensors may be of any suitable type, arranged to detect a compressive load normal to the plane of the sensor platform.

In one embodiment the tension sensors in the sensor platform are arranged to detect tension forces in the cleat attachment bolts when the cyclist pulls up against the cleat and pedal. The cleat attachment bolts are screwed into the sensor platform, through the sole of the shoe, and the tension sensors are positioned at the bolt holes so that any pull on the bolts is measured by the tension sensors. Typically there are 3 or 4 cleat attachment bolts, and each bolt hole must have an associated tension sensor.

This arrangement of force sensors allows the device to intercept and measure all compression and tension forces applied by the cyclist to the cleat and pedal. These measurements are passed from the sensor platform to the processing module via a communication link.

In one embodiment the processing module may be positioned anywhere in or on the shoe, including within the sensor platform or integrated into the structure of the shoe or in a pocket on the inside or outside of the shoe. The processing module may be a permanent part of the shoe or it may be removable and replaceable by the end user. The connection between the sensor platform and the processing module may be wireless or wired. If it is a wired connection then the connecting wires are integrated into the construction of the shoe and have connectors at each end to facilitate electrical attachment of the sensor platform and the processing module. The connectors are also integrated into the construction of the shoe.

In one embodiment the compression and tension sensors measure forces that are normal to the plane of the sensor platform. It is also useful to know the shear force applied by a cyclist while pedalling. Shear force is force applied along the plane of the sensor platform, either forwards or backwards. Shear force may be measured directly by including shear force sensors in the sensor platform, or it may be calculated from the compression and tension force measurements according to the following algorithm. Using the algorithm avoids the requirement to include shear sensors, thereby reducing the cost and complexity of the sensor platform. If shear force sensors are included in the sensor platform then this algorithm may be used to confirm the calibration of all the sensors by calculating the shear force and comparing it to the measured shear force.

The pedal on a bicycle crank is free to rotate easily around a short axle attached to the end of the crank. In order that the pedal does not rotate around its own axle during pedalling it must be the case that the total moment of forces around the pedal axle is zero at all times. This means that the cyclist must apply force so that the moment of forces tending to rotate the pedal one way around its own axle is exactly equal to the moment of forces tending to rotate the pedal the other way. In fact during typical pedalling action the pedal rotates back and forth, but as there is no great force opposing this rotation the moment of force required to rotate the pedals back and forth is very small with respect to the total forces applied, and therefore the force used to rotate the pedals can be neglected for this algorithm.

If the force applied by a cyclist is completely normal to the plane of the cleat and pedal, and does not include any element of shear force, then the sum of the moments about the pedal axle of the forces measured by each of the compression and tension sensors will be zero.

If the cyclist, while pedalling, includes any component of shear force along the plane of the cleat and pedal then this force will not be directly measured by the compression and tension sensors, because they measure only the components of the forces that are normal to the plane. The shear force is applied at some short distance above the pedal axle determined by the total thickness of the pedal, cleat and sole (typically 1 cm to 2 cm), and therefore it will produce a moment about the pedal axle. However, the sum of the moments about the pedal axle must still be zero, and therefore the moment produced by the shear force must be opposed by a change in the total moment produced by the compression and tension forces. This change in the total moment of the normal forces can be detected by examination of the measurements from the compression and tension sensors, and therefore the magnitude of the shear force can be calculated. That is, if the sum of the moments about the pedal axle calculated from the values from the compression and tension sensors is not equal to zero then the deviation from zero must be due to a shear force component.

In one embodiment there is provided a device for determining power output comprising at least one sensor configured to be accommodated between a foot and a sole of a shoe; wherein the sensor is adapted to measure a compression force applied by a user to a pedal of a bicycle.

In one embodiment there is provided a device for determining power output comprising at least one sensor configured to be accommodated between a foot and a sole of a shoe; wherein the sensor is adapted to measure a tension force applied by a user to a pedal of a bicycle.

## Brief Description of the Drawings

The invention will be more clearly understood from the following description of an embodiment thereof, given by way of example only, with reference to the accompanying drawings, in which:-

Figure 1 illustrates a block diagram of a typical force and power measurement system for a bicycle;
Figure 2 illustrates the orthogonal components of force applied by a cyclist;
Figure 3 illustrates a cross section of a cycling shoe, showing the space for the sensor platform of the invention;
Figure 4 illustrates a cross section of a cycling shoe, showing the sensor platform of the invention;
Figure 5 illustrates a plan of the sole of a cycling shoe, showing the sensor platform of the invention;
Figure 6 illustrates a cross section of the sensor platform, sole, and cleat of the invention;
Figure 7 illustrates a detailed cross section of the sensor platform of the invention;
Figure 8 illustrates the integrated cabling, connectors and pocket for the processing module for the shoe of the present invention;
Figure 9 illustrates the forces producing equal clockwise and anticlockwise moments through the shoe of the present invention;
Figure 10 illustrates forces producing unequal moments, to counteract the moment due to shear force through the shoe of the present invention;
Figure 11 illustrates the position of the pedal axle when the cleat is fixed in a standard position on the shoe of the present invention;
Figure 12 illustrates the position of the pedal axle when the cleat is fixed ion a rotated position on the shoe of the present invention;
Figure 13 illustrates the position of the pedal axle when the cleat is fixed in a shifted position on the shoe of the present invention; and
Figure 14 illustrates the marks for measuring the cleat position on the shoe of the present invention.

## Detailed description of the Drawings

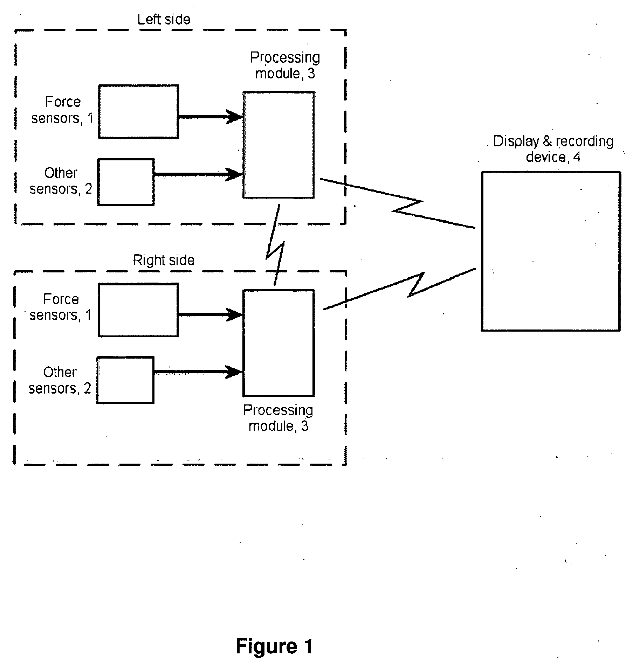

Figure 1 illustrates the general arrangement of sensors, processing modules and displays for a typical system used to monitor force and/or power exerted by a cyclist on a bicycle by measuring forces and motion at the shoes or cleats or pedals. On the shoe or cleat or pedal on one side of the bicycle a set of force sensors 1 and a set of motion sensors 2 are connected to an electronic processing module 3. A similar arrangement is used on the other/opposite side of the bicycle. Typically each processing module 3 operates many times per second to take measurement values from the force 1 and motion sensors 2 and calculate derived quantities such as cadence, torque and power. Typically the processing modules communicate with each other by a wired or wireless link to exchange information, and one or both of the processing modules transmits data to a display device 4 via a wired or wireless link.

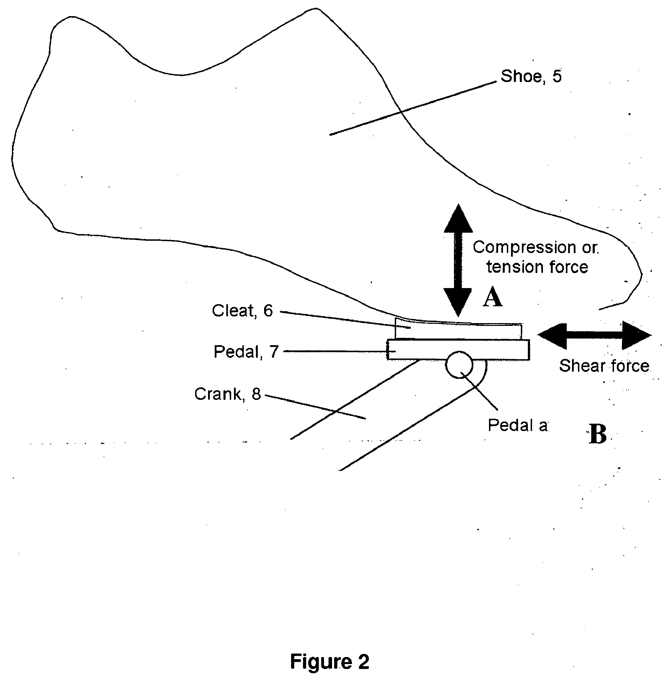

To be useful and accurate the system must measure all the force exerted by the cyclist on each pedal. In exerting force on a pedal a cyclist applies force from their foot to a shoe, from the shoe to a cleat, and from the cleat to a pedal, as illustrated in Figure 2. A cleat 6 is bolted to the sole of a shoe 5, and is engaged positively with a pedal 7 so that the cyclist can exert force by pushing or pulling their foot in any direction in the plane of rotation of a crank 8. Whatever direction the cyclist applies force in, it is useful to consider the two orthogonal components of the force that are normal and parallel to the plane of the cleat/pedal interface. These force components are at right angles to each other and their magnitudes can be used to completely represent the direction and magnitude of the total force applied to the pedal in the plane of the revolution of the crank. The force component that is normal to the plane of the cleat/pedal interface is referred to as compression force if it is towards the pedal (indicated by arrow A in Figure 2), and tension force if it is away from the pedal. The force component that is parallel to the plane of the cleat/pedal interface is referred to as shear force (indicated by arrow B in Figure 2).

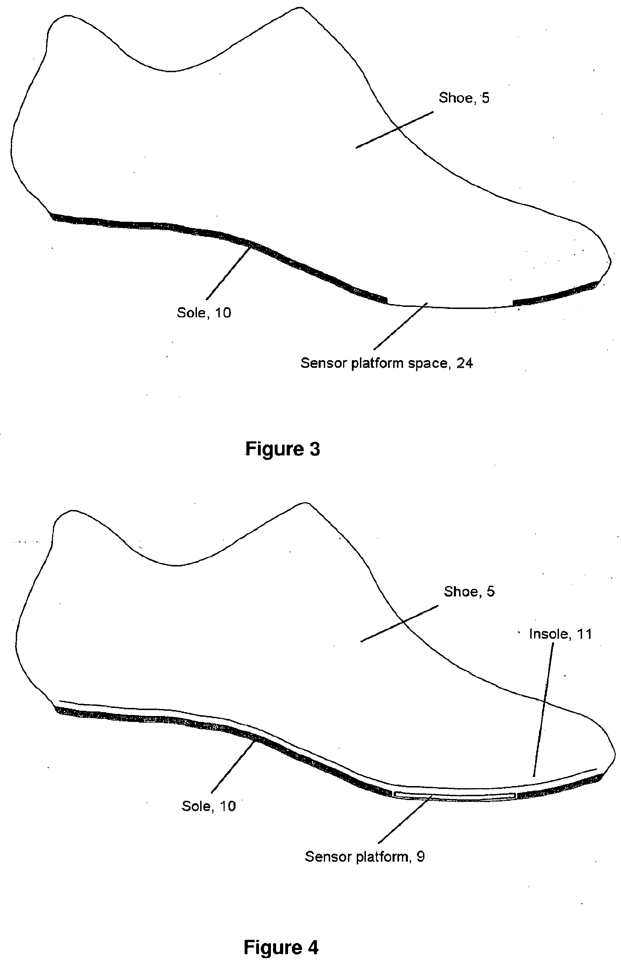

The present invention provides a means to measure or calculate the compression, tension and shear forces by using a force sensor platform 9 inside a sole 10 of a (cycling) shoe 5. The sensor platform 9 is in a specially formed space 24 in the inside surface of the sole 10 so that the space is between the cyclist's foot and the sole of the shoe. Figure 3 shows a cross section of the shoe 5, including the space 24 in the sole 10. Figure 4 shows the sensor platform 9 inserted into the space 24 in the sole 10, and covered by an insole 11.

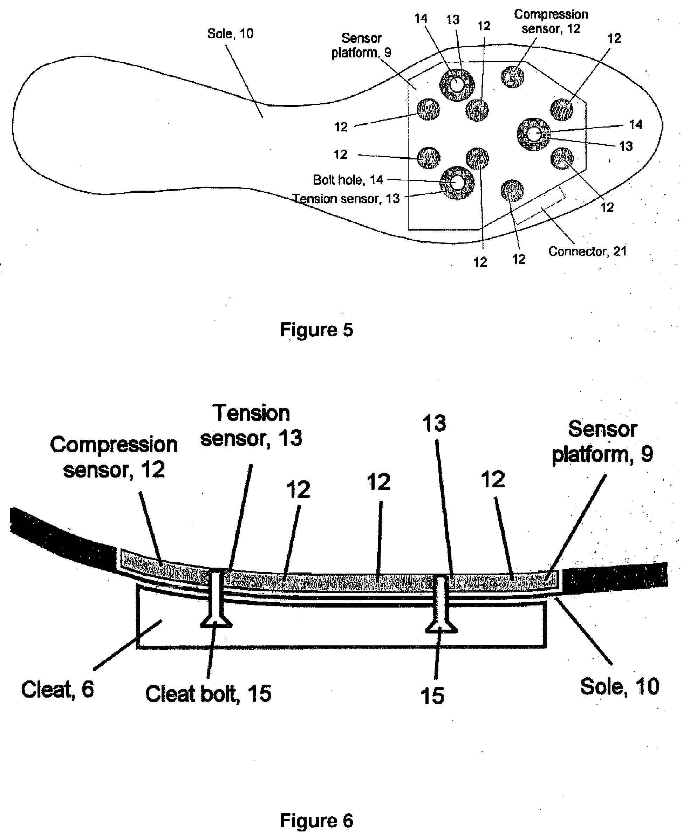

Figure 5 illustrates the position of the sensor platform 9 in the sole 10, and shows a possible arrangement of sensors in it. The sensor platform 9 extends over the part of the sole 10 that is used to bolt the cleat 6 to the shoe 5, and is shaped such that it covers all parts of the inside of the sole 10 that can on its outside surface be in contact with a cleat 6. The sensor platform 9 contains a number of sensors 12 to measure compression forces, and a number of sensors 13 to measure tension forces. Each tension force sensor 13 is associated with a hole 14 used to bolt the cleat 6 to the sole 10. The space 24 for the sensor platform is shaped to hold the sensor platform 9 securely, and may include fixing points to ensure that the sensor platform 9 stays in place during activity. The sensor platform 9 is covered by the internal sole or insole 11 of the shoe. In one alternative embodiment, the sensor platform 9 may be installed in the shoe during manufacture and assembly of the shoe 5. In another alternative the sensor platform 9 may be installed in the shoe 5 by the end user after purchasing them.

Figure 6 shows a cross section of the sensor platform 9 positioned in the prepared space 24 in the sole 10 of the shoe 5, with a cleat 6 attached. Cleat bolts 15 pass from the cleat 6 through holes in the sole 10 of the shoe 5 and are screwed directly into threaded holes 14 in the sensor platform 9. The sensor platform 9 contains a set of compression sensors 12 and a set of tension sensors 13 positioned such that they measure compression and tension forces normal to the plane of the interface between the cleat 6 and the pedal 7.

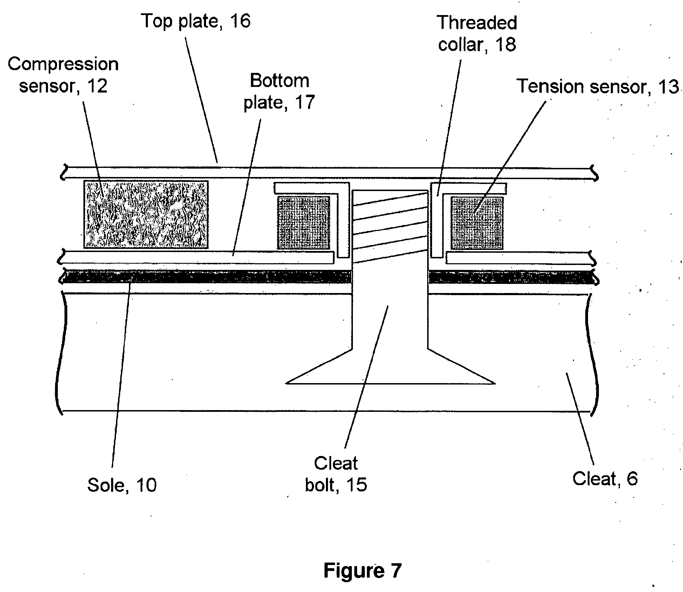

Figure 7 is a detailed cross section of part of the sensor platform 9, showing parts of a top plate 16 and a bottom plate 17 and a possible arrangement of one compression sensor 12 and one tension sensor 13. The top plate 16 and the bottom plate 17 extend across the whole of the top and bottom surfaces of the sensor platform 9, with the force sensors 12,13 positioned between the plates 16,17. The plates 16,17 distribute the forces exerted by the cyclist across the plurality of sensors 12,13, and ensure that no force can act between the plates 16,17 except by passing through at least one of the sensors 12,13. When fitted to a shoe 5, the bottom plate 17 is in contact with the inside surface of the sole 10 of the shoe 5, and the top plate 16 is covered by the internal sole cover or insole 11. The compression sensors 12 and tension sensors 13 are positioned between the top 16 and bottom 17 plates such that they measure compression and tension forces normal to the plane of the plates.

The compression sensors 12 are positioned in the sensor platform 9 so that they are the only significant force path between the top plate 16 and the bottom plate 17, and any compression force applied to the top plate 16 will be detected by one or more of the compression sensors 12. The number of compression sensors 12 fitted may vary to provide the required trade off between detail of measurement and cost of manufacture.

The tension sensors 13 measure all force tending to pull the cleat attachment bolts 15 away from their threaded holes 18 in the sensor platform 9. There is at least one tension sensor 13 for each threaded hole 18 in the sensor platform. One possible arrangement of the tension sensor 13 is shown in figure 7. In this arrangement the cleat bolt 15 is screwed into a threaded collar 18 that is part of the tension sensor 13 inside the sensor platform 9. Tension force on the bolt 15 is converted to compression force on the sensor 13 and is measured. Thus, any force exerted by the cyclist to pull away from the pedal 7 will cause a tension force on the bolt 15 which will be measured by the sensor 13.

The compression sensors 12 and tension sensors 13 shown in figure 7 are illustrative examples. There are a number of sensor technologies and arrangements known that can easily be used in the sensor platform. These include piezoelectric, piezoresistive, strain gauge, capacitive, resistive or other technology capable of accurately measuring applied force. Sensor types that measure directly applied compression force, such as piezoelectric or capacitive sensors, may be positioned directly between the appropriate parts of the sensor platform 9. Sensor types that measure deformation or stretching, such as piezoresistive or strain gauge, may be positioned in commonly used arrangements such that they are deformed or stretched appropriately when force is applied to the sensor platform 9.

The sensor platform 9 will detect and directly measure all force applied by a foot inside the shoe 5 pressing downwards on a cleat 6 engaged with a pedal 7, and all force applied by pulling upwards against a cleat 6 engaged with a pedal 7. When the cyclist presses down the forces are measured by the set of compression sensors 12, and the set of tension sensors 13 are not affected because there is no change in the tension in the cleat attachment bolts 15. When the cyclist pulls up the forces are measured by the set of tension sensors 13, and the set of compression sensors 12 are not affected because the cyclist's foot tends to lift off the sole of the shoe and therefore off the top plate 16 of the sensor platform 9.

The sensor platform 9 may include other sensors to measure force or motion. It may include electronic circuits for acquiring and processing the values from those sensors, and electronic circuits to communicate the values to a processing module or display. The connection between the sensor platform 9 and the processing module 3 may be wired or wireless. The processing module 3 may be in any appropriate location in or on the shoe 5, including inside the sensor platform 9, in a separate space in the sole 10 of the shoe 5, in a space formed in the material of the shoe 5, or temporarily or permanently attached to the outside of the shoe 5. The processing module 3 may be installed in the shoe 5 during manufacture and assembly of the shoe, or may be installed by the end user after purchasing the shoe 5 and the processing module 3.

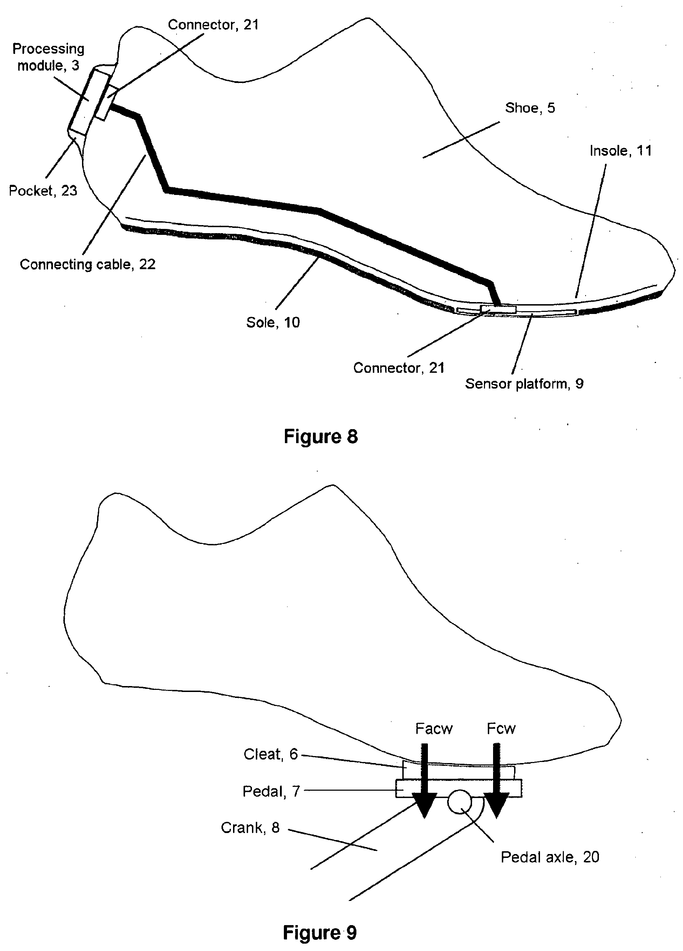

Figure 8 shows one possible arrangement of the sensor platform 9 and the processing module 3 in which they are separate and are connected by an electronic cable 22. In this arrangement the connecting cable 22 is integrated into the shoe 5 during manufacture and assembly of the shoe 5, and may include a connector 21 to attach and detach the sensor platform 9 and the processing module 3. The cable 22 and connector 21 are integrated into the sole 10 and/or other part of the shoe 5 so that they are protected when the shoe 5 is in use from both objects and the environment outside the shoe 5 and from movement of the cyclist's foot inside the shoe 5. The design of the shoe includes a prepared space or pocket 23 for the processing module 3 with the connector 21 appropriately positioned in the pocket 23. The sensor platform 9 and the processing module 3 may be inserted or replaced by the user, and connected to the cable 22 via the connector 21.

In another arrangement, the sensor platform 9 or the processing module 3, or both, are permanently assembled into the shoe 5 during manufacture of the shoe and are permanently attached to the cable 22.

The processing module 3 and the sensor platform 9 may be powered by one or more batteries that may be inside the processing module 3 or the sensor platform 9 or may be separate from them. The batteries may be replaceable by the end user or may be rechargeable by the end user. If they are replaceable then the location of the batteries facilitates access to them by the end user. If they are rechargeable then there is an electrical input socket accessible when the shoe 5 is not in use and not being worm.

The processing module 3 takes the values from various sensors on the shoe 5, including the compression sensors 12 and tension sensors 13 in the sensor platform 9. The module 3 processes the sensor values many times per second to calculate various results, and sends the results by a wired or wireless connection to one or more display and/or recording devices 4.

The present invention includes an algorithm by which the processing module 3 uses the values from the compression and tension force sensors 12,13 to calculate the shear force being applied by the cyclist. The algorithm is based on the principal that the total of the moments of forces around the pedal axle must be zero, or negligibly close to zero, at all times. The moment of a force is calculated as the magnitude of the force multiplied by the perpendicular distance from the line of action of the force to the centre of rotation. Moments tending to rotate the pedal one direction have an opposite sign to moments tending to rotate the pedal the other direction. Any apparent non-zero total moment calculated from the outputs of the compression and tension sensors must be due to compensating force being applied to oppose the moment caused by a shear force.

Figure 9 illustrates a situation where a cyclist is applying only compression force. The force is applied from the foot through the sensor platform 9 to the sole 10, the cleat 6 and the pedal 7. The compression force is indicated in Figure 9 as $F_{CW}$ measured at a perpendicular distance $d_{CW}$ from the pedal axle 2 and $F_{acw}$ measured at a perpendicular distance $D_{ACW}$ from the pedal axle 20. The moment produced by force $F_{cw}$ tends to rotate the pedal 7 clockwise about its axle 20, and the moment produced by force $F_{acw}$ tends to rotate it anticlockwise. The pedal does not rotate (or at least, any rotation is small and requires insignificant moment) so therefore the clockwise and anticlockwise moments must be equal:

$$F_{cw} \text{ x } d_{cw} = F_{acw} \text{ x } d_{acw}$$

where $d_{cw}$ is the perpendicular distance from the centre of rotation of the pedal axle to the line of action of force $F_{cw}$; and $d_{acw}$ is the perpendicular distance to the line of action of $F_{acw}$.

In a general case with a number of compression and tension sensors measuring forces at specific points, each measured force has a clockwise or an anticlockwise moment around the pedal axle 20 and the sum of clockwise moments must equal the sum of anticlockwise moments:

$$\Sigma(F_{cw} \text{ x } d_{cw}) = \Sigma(F_{acw} \text{ x } d_{acw})$$

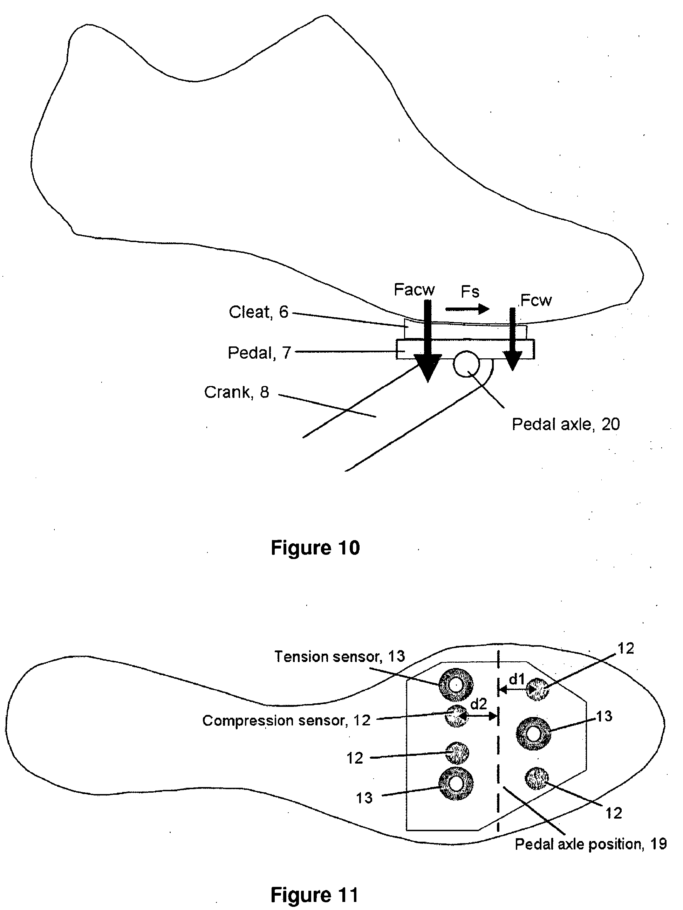

Figure 10 illustrates the situation when the cyclist applies a component of shear force in addition to compression force. The shear force $F_s$ is considered to act in a forwards direction along the plane of the sensor platform, which is at a known perpendicular distance $d_s$ from the pedal axle. To maintain the total moment of force around the pedal axle at zero, the cyclist must adjust the balance of forces by reducing $F_{cw}$ and increasing $F_{acw}$. Therefore:

$$(F_{cw} \times d_{cw}) + (F_s \times d_s) = F_{acw} \times d_{acw}$$

In the general case, with a number of compression and tension sensors measuring forces at different points in the sensor platform:

$$\Sigma(F_{cw} \times d_{cw}) + (F_s \times d_s) = \Sigma(F_{acw} \times d_{acw})$$

All the compression and tension forces $F_{cw}$, and $F_{acw}$ are measured, the perpendicular distances $d_{cw}$ and $d_{acw}$ from each force sensor to the pedal axle are known, and the distance $d_s$ from the sensor platform to the pedal axle is known, therefore the shear force $F_s$ can be calculated:

$$F_s = (\Sigma(F_{acw} \times d_{acw}) - \Sigma(F_{cw} \times d_{cw})) / d_s$$

In practice the perpendicular distances from each of the compression and tension sensors 12,13 to the pedal axle 20 will depend on the exact position of the cleat 6 on the sole 10 of the shoe 5. Typically there is some small positional adjustment possible when the cleat 6 is being bolted to the sole 5 by a user, and this will affect the relationship between the sensors 12, 13 and the pedal axle 20. The positional relationship between the cleat 6 and the pedal 7 is not changed by how the cleat 6 is bolted to the shoe 5; it is the relationship between the shoe 5 and the cleat 6 that is affected. Therefore the relationship between the sensor platform 9 and the pedal 7 is affected, and the perpendicular distances from the force sensors 12, 13 to the pedal axle 20 may change. Therefore the possible variation in these perpendicular distances must be measured in order for this algorithm to be accurate.

Figure 11 illustrates the relationship between the sensor platform 9 and the position 19 of the pedal axle 20 when the cleat 6 is fixed in an ideal central position on the shoe 5. Each of the compression and tension force sensors 12, 13 has a perpendicular distance from it to the pedal axle position 19. In Figure 11 the perpendicular distances from two representative force sensors 12 to the pedal axle position 19 are marked in the figure as $d_1$ and $d_2$.

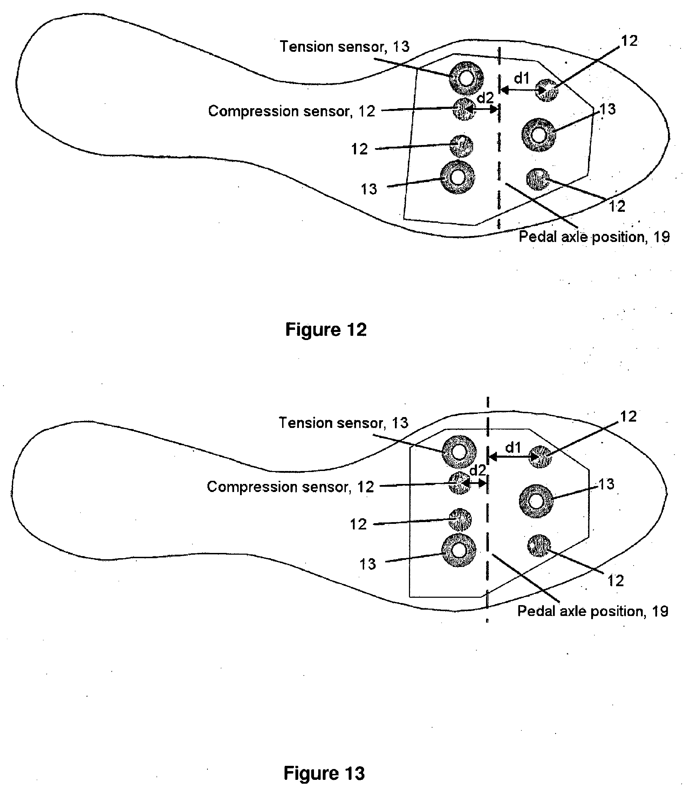

Figure 12 illustrates the effect on these perpendicular distances of a variation in the position of the cleat 6. In this example the cleat 6 is fixed in a position that is rotated by approximately 5 degrees from the ideal position shown in Figure 11. It can be seen that $d_1$ increases and $d_2$ decreases, which will affect the values of the moments due to the forces measured by these two sensors 12.

Figure 13 illustrates the effect of fixing the cleat to the shoe in a position that is shifted towards the back of the shoe relative to the ideal position shown in Figure 11. It can be seen that this shift increases $d_1$ and reduces $d_2$, and therefore the moments associated with the forces measured by those two sensors 12 are affected.

There are obviously corresponding changes to the perpendicular distances for all the compression and tension sensors 12, 13 in the sensor platform 9 if the cleat 6 is rotated and/or shifted from the ideal position. These distances from each sensor 12,13 to the pedal axle position 19 are required for the algorithm that calculates shear force, and therefore it is necessary to know the exact position of the cleat 6 on the sole 10 of the shoe 5 after the user has bolted it on.

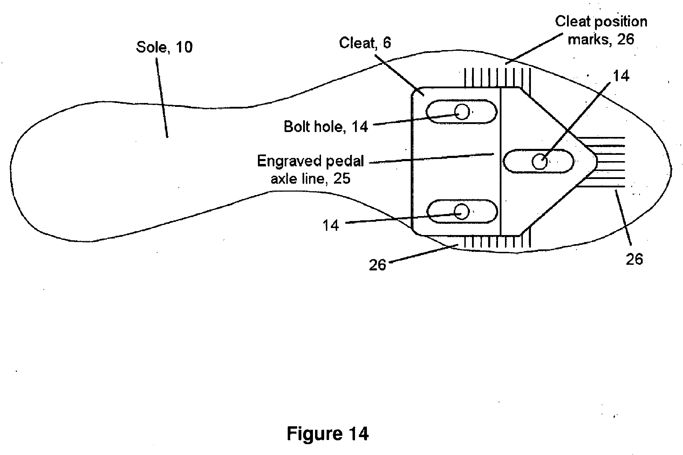

The position of the cleat 6 on the sole 10 can be determined by observing it after it has been bolted on. Figure 14 shows the outside of a sole 10, with a cleat 6 fixed to it. Marks and scales 26 printed or embossed on the outside of the sole 10 of the shoe 5 include numeric values that provide a measure of the position of the cleat 6. Typically a cleat 6 includes a mark 25 to indicate the line of the pedal axle 20 when the cleat 6 is engaged with a pedal 7. The position of this mark 25 against the position marks 26 on the sole 10 can be observed on each side of the cleat 6 when it has been bolted to the sole 10. Other positional observations may be made against position scales and marks 26 at other points around the cleat 6. The observed values are entered into the processing module 3 by the user via a computer during a configuration or update operation. This, together with dimensional details of the cleat and the shoe preprogrammed into the processing module 3, allows the module 3 to calculate the exact perpendicular distances from the pedal axle 20 to the line of normal force through each sensor 12,13 in the sensor platform 9.

The algorithm also calculates the balance of the forces across the width of the pedal 7 at each sample time. This provides a measure of how evenly the cyclist distributes force across the pedal 7 and how that varies as they cycle. Standard mathematical formulae can be used to calculate the effective centre of the total applied force, from the forces measured by the compression and tension sensors 12,13 in the sensor platform. The location of this centre of force along the width of the sensor platform 9 indicates whether the cyclist is applying force towards one side of the pedal 7 or the other, or equally on both sides.

The use of the algorithm is not limited to use with values from the measurement device described here. The algorithm can be used to calculate shear force for any system that measures compression and tension forces in the plane of the cleat/pedal interface. That includes systems that place force sensors between the sole 5 and the cleat 6, inside the cleat 6, between the cleat 6 and the pedal 7, and inside the pedal **7.** All that is necessary for the algorithm is measurement values from a set of compression and force sensors distributed on both sides of the pedal axle, the perpendicular distances from each sensor to the pedal axle, and the perpendicular distance $d_s$ from the sole of the shoe to the pedal axle. The shear force is assumed to be applied by the cyclist's foot such that it acts along the sole of the shoe parallel to the cleat/pedal interface, and therefore $d_s$ is the distance that gives the shear force a rotational moment about the pedal axle.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

**Claims**

1. A device for determining power output comprising at least two sensors (12, 13) adapted to attach to a cleat (6); wherein the sensors (12, 13) are adapted to measure a compression force and a tension force applied by a user to a pedal (7) of a bicycle such that the power output can be determined, **characterized in that** the at least two sensors are configured to be accommodated between a foot of the user and a sole (10) of a shoe (5)

2. A device according to Claim 1, wherein the sensors (12, 13) are embedded in a platform.

3. A device according to Claim 2, wherein the platform comprises a cover plate and a base plate adapted to accommodate the sensors (12, 13) there between.

4. A device according to Claim 3, wherein the compression sensor (12) detects compression forces between the cover plate and the base plate.

5. A device according to any one of Claims 2 to 4, wherein the platform further comprises engaging means adapted to matingly engage the shoe with the cleat (6).

6. A device according to Claim 5, wherein the engaging means is associated with at least one sensor (13) configured to detect tension forces.

7. A device according to Claim 6, wherein the sensor (13) detects tension forces between the platform and the cleat.

8. A device according to any one of the preceding claims, further comprising a processing module (3) configured to process the compression and tension force measurements from the sensors (12, 13) such that any shear force applied by the user is calculated.

9. A device according to any one of Claims 2 to 7 or claim 8 when dependent on any of claims 2-7, wherein the compression and tension sensors (12, 13) measure forces that are substantially normal to the plane of the sensor platform (9).

10. A device according to Claim 8 when dependent on any of claims 2-7 or Claim 9, wherein the measurements are passed from the sensor platform (9) to the processing module via a communication link.

11. A device according to Claim 10, wherein the communication link is a wireless or a wired connection.

12. A device according to any one of Claims 8 to 11, wherein the module is further adapted to calculate at least one or more of the following measurements: velocity, angular position of the user, cadence, pressure, force distribution, torque and power.

13. A shoe (5) for bicycling comprising the device of any one of the preceding claims.

14. A shoe according to Claim 13, wherein the device is accommodated in the sole (10) of the shoe.

15. A method for determining power output comprising the steps of positioning at least two sensors (12, 13) between a foot of a user and a sole (10) of a shoe (5); and adapted to attach to a cleat (6), and measuring a compression force and a tension force applied by the user to a pedal (7) of a bicycle using said sensors such that the power output can be determined.

**Patentansprüche**

1. Vorrichtung zum Bestimmen von Leistungsausgang, die wenigstens zwei Sensoren (12, 13) umfasst, ausgelegt zum Anbringen an einer Klampe (6); wobei die Sensoren (12, 13) zum Messen einer von einem Benutzer auf ein Pedal (7) eines Fahrrads aufgebrachten Druckkraft und Zugkraft ausgelegt sind, so dass der Leistungsausgang bestimmt werden kann, **dadurch gekennzeichnet, dass** die wenigstens zwei Sensoren zum Unterbringen zwischen einem Fuß des Benutzers und einer Sohle (10) eines Schuhs (5) konfiguriert sind.

2. Vorrichtung nach Anspruch 1, wobei die Sensoren (12, 13) in einer Plattform eingebettet sind.

3. Vorrichtung nach Anspruch 2, wobei die Plattform eine Abdeckplatte und eine Basisplatte zum Unterbringen der Sensoren (12, 13) dazwischen umfasst.

4. Vorrichtung nach Anspruch 3, wobei der Drucksensor (12) Druckkräfte zwischen der Abdeckplatte und der Basisplatte erkennt.

5. Vorrichtung nach einem der Ansprüche 2 bis 4, wobei die Plattform ferner Eingriffsmittel zum paarenden Eingreifen in den Schuh mit der Klampe (6) umfasst.

6. Vorrichtung nach Anspruch 5, wobei das Eingriffsmittel mit wenigstens einem Sensor (13) assoziiert ist, der zum Erkennen von Zugkräften konfiguriert ist.

7. Vorrichtung nach Anspruch 6, wobei der Sensor (13) Zugkräfte zwischen der Plattform und der Klampe erkennt.

8. Vorrichtung nach einem der vorherigen Ansprüche, die ferner ein Verarbeitungsmodul (3) umfasst, konfiguriert zum Verarbeiten der Druck- und Zugkraftmesswerte von den Sensoren (12, 13), so dass eine vom Benutzer aufgebrachte Scherkraft berechnet wird.

9. Vorrichtung nach einem der Ansprüche 2 bis 7 oder Anspruch 8 in Abhängigkeit von einem der Ansprüche 2 - 7, wobei die Druck- und Zugsensoren (12, 13) Kräfte messen, die im Wesentlichen normal zur Ebene der Sensorplattform (9) sind.

10. Vorrichtung nach Anspruch 8 in Abhängigkeit von einem der Ansprüche 2 - 7 oder Anspruch 9, wobei die Messwerte von der Sensorplattform (9) über eine Kommunikationsverbindung zum Verarbeitungsmodul geleitet werden.

11. Vorrichtung nach Anspruch 10, wobei die Kommunikationsverbindung eine drahtlose oder eine verdrahtete Verbindung ist.

12. Vorrichtung nach einem der Ansprüche 8 bis 11, wobei das Modul ferner zum Berechnen von wenigstens einem oder mehreren der folgenden Messwerte ausgelegt ist:

    Geschwindigkeit, Winkelposition des Benutzers, Trittfrequenz, Druck, Kraftverteilung, Drehmoment und Leistung.

13. Schuh (5) zum Fahrradfahren, der die Vorrichtung nach einem der vorherigen Ansprüche umfasst.

14. Schuh nach Anspruch 13, wobei die Vorrichtung in der Sohle (10) des Schuhs untergebracht ist.

15. Verfahren zum Bestimmen von Leistungsausgang, das die folgenden Schritte beinhaltet: Positionieren von wenigstens zwei Sensoren (12, 13) zwischen einem Fuß eines Benutzers und einer Sohle (10) eines Schuhs (5), und ausgelegt zum Anbringen an einer Klampe (6), und Messen einer vom Benutzer auf ein Pedal (7) eines Fahrrads aufgebrachten Druckkraft und Zugkraft mit den genannten Sensoren, so dass der Leistungsausgang bestimmt werden kann.

**Revendications**

1. Dispositif servant à déterminer une sortie de puissance comportant au moins deux capteurs (12, 13) adaptés à des fins de fixation sur une cale (6) ; dans lequel les capteurs (12, 13) sont adaptés à des fins de mesure d'une force de compression et d'une force de tension appliquées par un utilisateur sur une pédale (7) d'une bicyclette de telle sorte que la sortie de puissance peut être déterminée, **caractérisé en ce que** lesdits au moins deux capteurs sont configurés pour être reçus entre un pied de l'utilisateur et une semelle (10) d'une chaussure (5).

2. Dispositif selon la revendication 1, dans lequel les capteurs (12, 13) sont encastrés dans une plateforme.

3. Dispositif selon la revendication 2, dans lequel la plateforme comporte une plaque formant couvercle et une plaque de base qui sont adaptées pour recevoir les capteurs (12, 13) entre elles.

4. Dispositif selon la revendication 3, dans lequel le capteur de compression (12) détecte des forces de compression entre la plaque formant couvercle et la plaque de base.

5. Dispositif selon l'une quelconque des revendications 2 à 4, dans lequel la plateforme comporte par ailleurs un moyen de mise en prise adapté à des fins de mise en prise par accouplement de la chaussure avec la cale (6).

6. Dispositif selon la revendication 5, dans lequel le moyen de mise en prise est associé à au moins un capteur (13) configuré pour détecter des forces de tension.

7. Dispositif selon la revendication 6, dans lequel le capteur (13) détecte des forces de tension entre la plateforme et la cale.

8. Dispositif selon l'une quelconque des revendications précédentes, comportant par ailleurs un module de traitement (3) configuré pour traiter les mesures des forces de compression et de tension en provenance des capteurs (12, 13) de telle sorte que toute force de cisaillement appliquée par l'utilisateur est calculée.

9. Dispositif selon l'une quelconque des revendications 2 à 7 ou selon la revendication 8 quand dépendante de l'une quelconque des revendications 2 à 7, dans lequel les capteurs de compression et de tension (12, 13) mesurent les forces qui sont sensiblement perpendiculaires par rapport au plan de la plateforme (9) de capteurs.

10. Dispositif selon la revendication 8 quand dépendante de l'une quelconque des revendications 2 à 7 ou selon la revendication 9, dans lequel les mesures sont transmises de la plateforme (9) de capteurs au module de traitement par le biais d'une liaison de communication.

11. Dispositif selon la revendication 10, dans lequel la liaison de communication est une connexion sans fil ou câblée.

12. Dispositif selon l'une quelconque des revendications 8 à 11, dans lequel le module est par ailleurs adapté pour calculer au moins une ou plusieurs parmi les mesures suivantes : vitesse, position angulaire de l'utilisateur, cadence, pression, répartition de la force, couple et puissance.

13. Chaussure (5) à des fins de cyclisme comportant le dispositif selon l'une quelconque des revendications précédentes.

14. Chaussure selon la revendication 13, dans laquelle le dispositif est reçu dans la semelle (10) de la chaussure.

15. Procédé servant à déterminer une sortie de puissance, comportant les étapes consistant à positionner au moins deux capteurs (12, 13) entre un pied d'un utilisateur et une semelle (10) d'une chaussure (5) ; et adaptés à des fins de fixation sur une cale (6) ; et consistant à mesurer une force de compression et une force de tension appliquées par l'utilisateur sur une pédale (7) d'une bicyclette en utilisant lesdits capteurs de telle sorte que la sortie de puissance peut être déterminée.

**Figure 1**

Figure 2

Shoe, 5

Sole, 10

Sensor platform space, 24

**Figure 3**

Shoe, 5

Insole, 11

Sole, 10

Sensor platform, 9

**Figure 4**

**Figure 5**

**Figure 6**

Compression
sensor, 12

Top plate, 16

Bottom
plate, 17

Threaded
collar, 18

Tension sensor, 13

Sole, 10

Cleat
bolt, 15

Cleat, 6

**Figure 7**

**Figure 8**

**Figure 9**

**Figure 10**

**Figure 11**

Figure 12

Figure 13

Sole, 10

Cleat, 6

Cleat position
marks, 26

14

Bolt hole, 14

Engraved pedal
axle line, 25

14

14

26

26

**Figure 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010000369 A
- US 8011242 O, O'Neill
- WO 2012038677 A, Gros
- US 20110067503 A, Rouergues
- WO 2010088888 A, Biermann
- US 7599806 B, Hauschildt
- US 8122773 B, Wyatt
- US 20110087446 A
- WO 2300796 A, Redmond
- US 7607243 B, Berner
- US 7627451 B, Vock
- WO 2009136128 A, Cattin
- WO 0033031 A, Shacar
- US 6807869 B, Farringdon
- JP 2005214850 A, Nojiri